# EUROPEAN PATENT SPECIFICATION

(11) **EP 0 906 627 B1**
(45) Date of publication and mention of the grant of the patent: **21.11.2001**
(21) Application number: 97928566.5
(22) Date of filing: 30.05.1997
(51) Int. Cl.: G21C 3/322

(54) **NUCLEAR FUEL ASSEMBLY**
KERBRENNSTOFFEINHEIT
ASSEMBLAGE COMBUSTIBLE NUCLEAIRE

(30) Priority: 20.06.1996 SE 9602448
(43) Date of publication of application: 07.04.1999
(73) Proprietor: Westinghouse Atom AB, 721 63 Västeras (SE)
(72) Inventor: HELMERSSON, Sture, S-730 40 Kolbäck (SE)
(74) Representative: Israelsson, Stefan
(86) International application number: SE9700933
(87) International publication number: WO9749097

(56) References cited:
- EP-A- 0 480 702
- EP-A- 0 557 039
- EP-A- 0 561 589
- EP-A- 0 566 863
- DE-A- 2 204 168

## Description

### TECHNICAL FIELD

The present invention relates to a fuel assembly for a boiling water reactor comprising a plurality of fuel rods extending between a top tie plate and a bottom tie plate and being surrounded by a fuel channel with a substantially square cross section. To improve the moderation internally in the fuel assembly, it comprises top-filled water tanks.

### BACKGROUND ART

In a boiling water reactor, moderated by means of light water, the fuel exists in the form of fuel rods, each of which contains a stack of pellets of a nuclear fuel arranged in a cladding tube. A fuel bundle comprises a plurality of fuel rods arranged in parallel with each other in a certain definite, normally symmetrical pattern, a so-called lattice, and is retained at the top by a top tie plate and at the bottom by a bottom tie plate. A fuel bundle for a boiling water reactor normally has a length of about 4 metres. To keep the fuel rods at a distance from each other and prevent them from bending or vibrating when the reactor is in operation, a plurality of spacers are distributed along the fuel bundle in the longitudinal direction. A fuel assembly comprises one or more fuel bundles, each one extending along the main part of the length of the fuel assembly and being surrounded by a substantially square fuel channel.

The core is immersed into water which serves both as coolant and as neutron moderator. During operation, the water flows from below and up through the fuel assembly, whereby part of the water is transformed into steam. The percentage of steam increases towards the top of the fuel assembly. Consequently, the moderator in the lower part of the fuel assembly consists of water whereas the moderator in the upper part of the fuel assembly consists of both steam and water. Because of its lower density, steam is much inferior to water as moderator, which means that the higher up in the fuel assembly, the worse the moderation. It is primarily in the upper half of the fuel assembly that the steam content is so large that the moderation is influenced.

In the core, the fuel assemblies are surrounded by water which gives a good moderation of fuel rods near the fuel channel. In fuel rods in the central parts of the fuel assembly, on the other hand, inferior moderation will occur. Above all the central parts of the upper part of the fuel assembly will have an insufficient moderation because of high steam contents. To improve the insufficient moderation of the central parts of the fuel assembly, many fuel assemblies are provided with one or more channels conducting non-boiling water through the central parts of the fuel assembly. The channel extends from the bottom tie plate to the top tie plate and has an opening in its lower end for admitting water and an opening in its upper end for releasing the water.

A disadvantage with these channels is that they occupy space which could otherwise be used for fuel rods. This is particularly true in the lower part of the fuel assembly where the steam content is very low and the moderation is fully sufficient. It is only the moderation in the upper part of the fuel assembly that needs improvement. A further advantage is that the channels require a passage of water to avoid boiling. This water is diverted from the coolant flow, whereby the cooling is deteriorated. The diverted flow is a few per cent of the total coolant flow.

The patent specification of EP-A-0 561 589 shows a fuel assembly wherein the above-mentioned problems have been solved by arranging a central water volume with non-flowing water above a number of part-length fuel rods, that is, fuel rods extending from the bottom tie plate and terminating below and spaced from the top tie plate. This water volume has the advantage that it is arranged only where it is needed, that is, in the upper part of the fuel assembly. The water volume is confined within a container or tank which is closed at the bottom and has openings in its upper end which are so adapted that they capture the surrounding water and diverts the steam formed. The water in this tank is substantially stationary as opposed to the water in the above-mentioned channels. In this way, the whole coolant flow may be utilized for cooling the fuel.

If the moderation in the upper part of the fuel assembly is to be improved, the tank should have a height of about 2 metres. One problem with such a water tank is that a certain heating takes place in the stationary water which, in turn, leads to boiling and hence formation of steam in the water tank. The heating is partly caused by slowing-down of neutron in the water and partly by absorption of gamma radiation in the water and in the walls of the tank. The water tank which is shown in the above-mentioned patent document is admittedly provided with openings in the top to release the formed steam, but the problem is that the water in the tank has a steam content rising in the axial direction, which means that the moderation drops towards the bottom of the tank. This situation is opposite to the desired one. The higher up in the fuel assembly, the worse the moderation and the greater the need of reinforcement of the moderation.

### SUMMARY OF THE INVENTION

The object of the invention is to suggest a fuel assembly which has an efficient moderation along its entire longitudinal axis and which, at the same time, gives a possibility of optimally utilizing the available fuel space.

What characterizes a fuel assembly according to the invention will become clear from the appended claims.

According to the invention, a plurality of short water tanks are arranged centrally in the fuel assembly, arranged one after the other in the longitudinal direction of the fuel assembly. The advantage of such an arrangement instead of a long continuous water tank is that the steam is allowed to successively disappear from the water tanks whereby an axially rising steam content in the water tank is avoided and a good moderation is obtained in the whole fuel assembly. The shorter the water tanks, the more uniform the moderation. From the flow point of view, it is an advantage if the tanks are arranged such that their longitudinal axes coincide, but sometimes there may be other weighty reasons which make it necessary to arrange the tanks displaced in the lateral direction in relation to one another.

A very favourable embodiment of a fuel assembly according to the invention comprises a plurality of fuel units stacked one above the other, each one comprising a plurality of parallel fuel rods extending between a top tie plate and a bottom tie plate. The fuel units are surrounded by a common fuel channel with a substantially square cross section. A fuel assembly of this type may, in a simple manner, be given different shapes in its upper and lower parts. Such a fuel assembly is shown in EP-A-0 799 483. According to the invention, each one of at least a plurality of these fuel units comprises a water tank arranged between the bottom tie plate and the top tie plate. Because of the flexibility of a fuel assembly with separate fuel units, certain fuel units may be provided with water tanks and certain fuel units may be without them. The volume of the water tanks may also vary between different fuel units in the same fuel assembly. In this way, an optimum moderation may be obtained along the whole fuel assembly. To achieve a uniform moderation, the fuel assembly should preferably contain at least three fuel units with water tanks.

### BRIEF DESCRIPTION OF THE DRAWINGS

Figure 1 schematically shows a fuel assembly according to the invention.
Figures 2 and 3 show a section A-A and a section B-B through the fuel assembly according to the invention.
Figure 4 shows in more detail a water tank in a fuel assembly according to the invention.
Figure 5 shows the upper part of a fuel assembly according to one embodiment of the invention, wherein the water tanks have different volumes.
Figures 6a and 6b show an embodiment of the invention wherein certain fuel units comprise two water tanks. Figure 6b shows the fuel assembly in Figure 6a through a section C-C.

### DESCRIPTION OF THE PREFERRED EMBODIMENTS

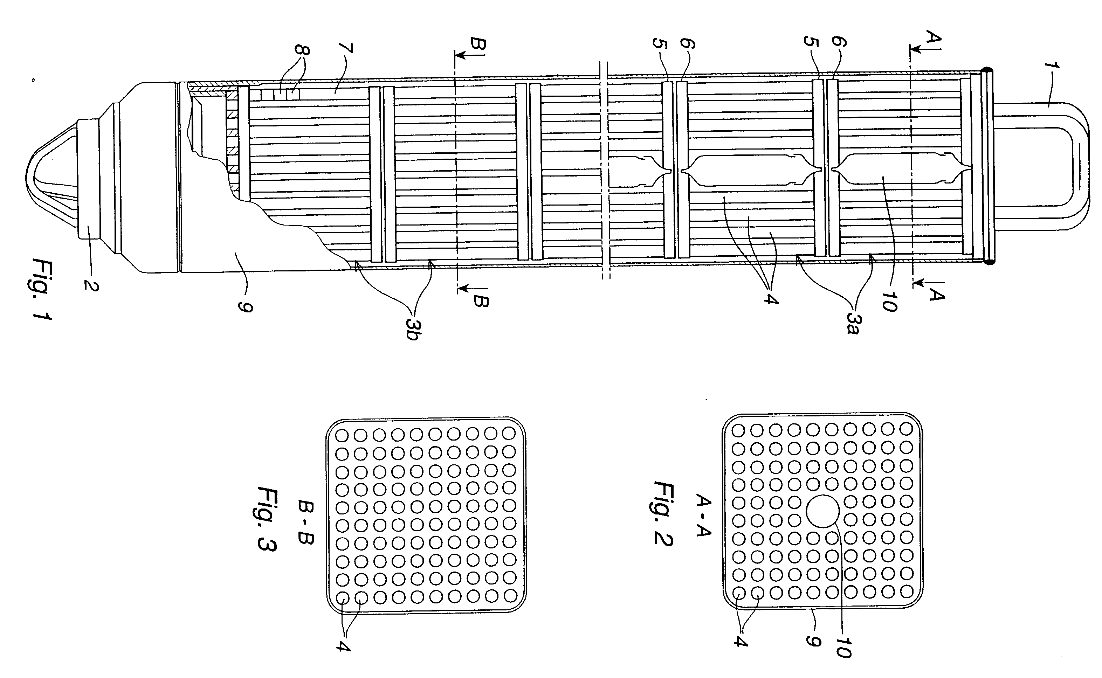

Figure 1 shows a fuel assembly according to the invention. The fuel assembly comprises an upper handle 1, a lower end portion 2 and a plurality of fuel units 3a and 3b stacked one above the other. Each fuel unit comprises a plurality of fuel rods 4 arranged in parallel and at definite distances from each other in a given lattice, and a top tie plate 5 and a bottom tie plate 6 for attachment of the fuel units in their respective positions in the lattice. The fuel units 3a and 3b are stacked on top of each other in the longitudinal direction of the fuel assembly and they are stacked in such a way that the top tie plate 5 in one fuel unit is facing the bottom tie plate 6 in the next fuel unit in the stack, and such that the fuel rods in all the fuel units are parallel to each other. A fuel rod 4 contains fuel in the form of a stack of uranium pellets 8 arranged in a cladding tube 7. The fuel assembly is enclosed in a fuel channel 9 with a substantially square cross section. In this embodiment, the fuel assembly comprises eight fuel units which have a height of about 0.5 m.

The fuel units are of two different types. A first type of fuel units 3a comprises a water tank 10 which is arranged between the bottom tie plate and the top tie plate, in parallel with the fuel rods. The water tank 10 is arranged at the centre of the fuel unit and is attached to the bottom tie plate and the top tie plate. During operation of the reactor, the tank contains water which contributes to improve the moderation centrally in the fuel unit. Between two fuel units there is no fuel, and the absence of neutron absorption in the fuel results in the number of thermal neutrons therefore being greater between the fuel units than inside the fuel units. Therefore, no extra moderation is needed between the fuel units, and it is sufficient and even advantageous that the water tanks have a somewhat smaller extent than the fuel rods. In this embodiment, four of the eight fuel units are of this first type and these are arranged at the top of the stack. A second type of fuel units 3b lacks water tank and instead has more fuel rods than the first type. The four lowermost fuel units in the stack are of this type.

Figure 2 shows a section A-A through the upper part of the fuel assembly in Figure 1. The fuel rods 4 are arranged in a 10x10 lattice. The water tank 10 has a substantially circular cross section which occupies four positions in the lattice.
Figure 3 shows a section B-B through the lower part of the fuel assembly in Figure 1. The fuel unit contains fuel rods 4 arranged in a 10x10 lattice and lacks water tank. All the positions in the lattice are occupied by fuel rods.

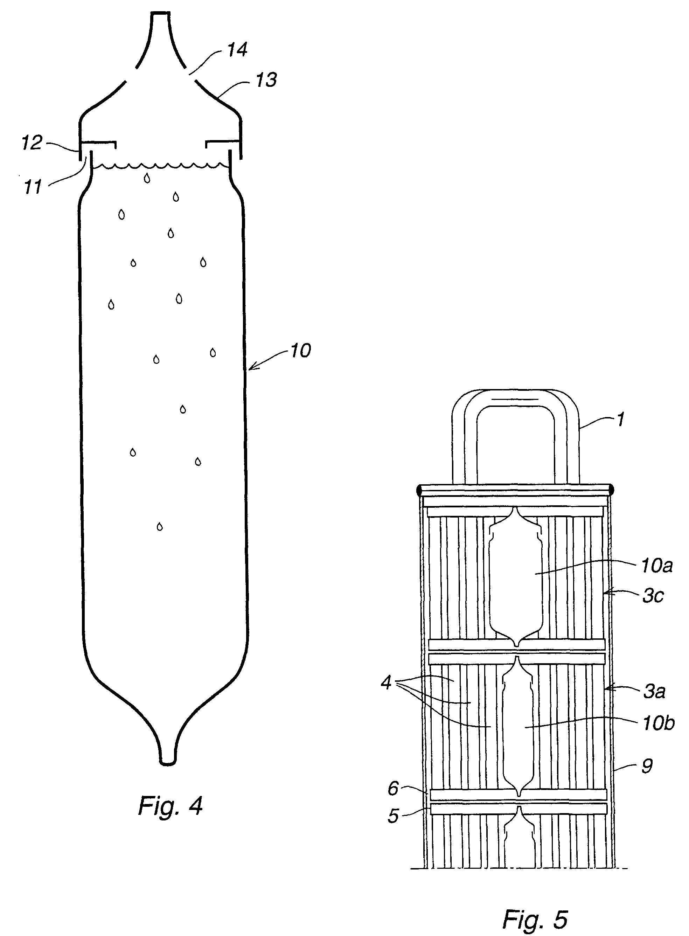

Figure 4 shows the water tank 10 in more detail. During operation, the tank is covered with a water film moving upwards towards the top of the tank. The tank is provided with means 12 for scraping off the water film and leading the scraped-off water into the tank through a plurality of openings 11. Further, the tank has a top part 13 tapering towards the top, which is provided with a plurality of openings 14 to release the steam formed when the water in the tank is boiling. The top part is formed for attachment to the top tie plate. The tank is closed at its lower part and formed for attachment to the bottom tie plate.

Figure 5 shows the upper part of a fuel assembly which has a fuel unit at the top of the stack, the water tank 10a has a volume which is larger than the water tank 10b in the next fuel unit in the stack.

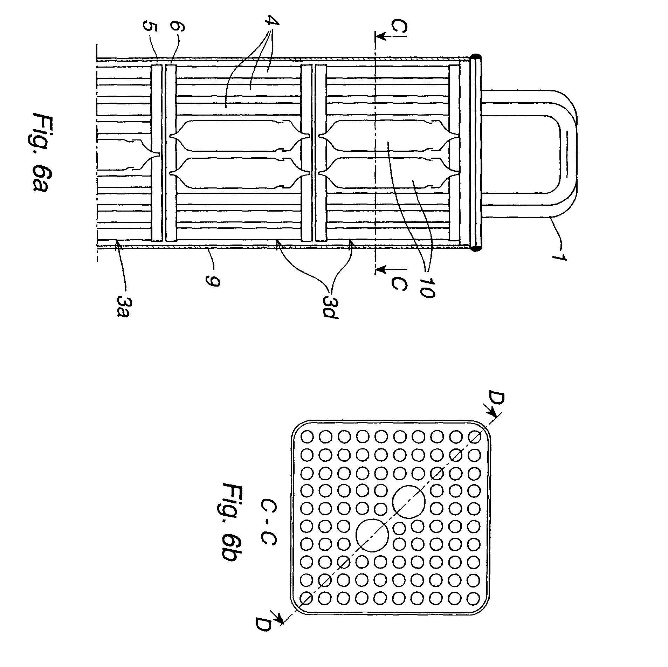

Instead of increasing the volume of the tanks higher up in the fuel assembly, several parallel water tanks may be arranged in the same fuel unit. Figures 6a and 6b show a fuel assembly with two parallel water tanks 10 arranged in the two uppermost fuel units. The other fuel units have one or no water tank.

## Claims

1. A fuel assembly for a boiling water reactor comprising
a plurality of fuel rods (4) extending between a top tie plate (5) and a bottom tie plate (6), and
an elongated tank (10) which is closed at its lower end and provided at its upper end with means (11, 12) for supplying water to the tank, and means (14) for releasing steam which is formed inside the tank, which tank is arranged with its longitudinal direction substantially parallel to the longitudinal direction of the fuel assembly, **characterized in that** the fuel assembly comprises a plurality of said tanks (10) and that these are arranged one after the other in the longitudinal direction of the fuel assembly.

2. A fuel assembly according to claim 1, **characterized in that** the number of tanks (10) is at least three.

3. A fuel assembly according to claim 1 or 2, **characterized in that** each tank (10a, 10b) has an arbitrarily chosen volume.

4. A fuel assembly according to any of the preceding claims, **characterized in that** it comprises at least two parallel tanks (10).

5. A fuel assembly according to any one of claims 1-3, **characterized in that** it comprises a plurality of fuel units (3a) stacked on top of each other, each fuel unit comprising
a top tie plate (5),
a bottom tie plate (6),
a plurality of fuel rods (4) which extend between the top tie plate and the bottom tie plate, and at least one of said tanks (10, 10a, 10b) which is arranged in parallel with the fuel rods between the top tie plate and the bottom tie plate.

6. A fuel assembly according to any one of claims 1 to 3, **characterized in that** it comprises a plurality of fuel units (3a) stacked on top of each other, each fuel unit comprising
a top tie plate (5),
a bottom tie plate (6),
a plurality of fuel rods (4) which extend between the top tie plate and the bottom tie plate,
where at least two of the fuel units each further comprises at least one of said tanks (10, 10a, 10b), where each tank is arranged in parallel with the fuel rods and between the top tie plate and the bottom tie plate.

## Patentansprüche

1. Brennelement für einen Siedewasserreaktor mit einer Vielzahl von Brennstäben (4), die sich zwischen einer oberen Verbundplatte (5) und einer unteren Verbundplatte (6) erstrecken, und
mit einem langgestreckten Tank (10), der an seinem unteren Ende verschlossen ist und an seinem oberen Ende mit einer Einrichtung (11,12) für die Zufuhr von Wasser in den Tank versehen ist, und
mit einer Einrichtung (14) zum Ablassen von Dampf, der sich im Inneren des Tanks bildet, welcher Tank mit seiner Längsrichtung im wesentlichen parallel zur Längsrichtung des Brennelementes angeordnet ist, **dadurch gekennzeichnet, daß** das Brennelement eine Vielzahl der genannten Tanks (10) enthält und daß diese in Längsrichtung des Brennelementes hintereinander angeordnet sind.

2. Brennelement nach Anspruch 1, **dadurch gekennzeichnet, daß** die Anzahl der Tanks (10) mindestens drei beträgt.

3. Brennelement nach Anspruch 1 oder 2, **dadurch gekennzeichnet, daß** jeder Tank (10a, 10b) ein beliebig gewähltes Volumen hat.

4. Brennelement nach einem der vorhergehenden Ansprüche, **dadurch gekennzeichnet, daß** es mindestens zwei parallele Tanks (10) enthält.

5. Brennelement nach einem der Ansprüche 1 bis 3, **dadurch gekennzeichnet, daß** es eine Mehrzahl von Brennstoffeinheiten (3a) enthält, die übereinander gestapelt sind, wobei jede Brennstoffeinheit enthält
- eine obere Verbundplatte (5),
- eine untere Verbundplatte (6),
- eine Vielzahl von Brennstäben (4), die sich zwischen der oberen Verbundplatte und der unteren Verbundplatte erstrecken, und
- mindestens einen der genannten Tanks (10, 10a, 10b), der parallel zu den Brennstäben zwischen der oberen Verbundplatte und der unteren Verbundplatte angeordnet ist.

6. Brennelement nach einem der Ansprüche 1 bis 3, **dadurch gekennzeichnet, daß** es eine Mehrzahl von Brennstoffeinheiten (3a) enthält, die übereinander gestapelt sind, wobei jede Brennstoffeinheit enthält
- eine obere Verbundplatte (5),
- eine untere Verbundplatte (6),
- eine Vielzahl von Brennstäben (4), die sich zwischen der oberen Verbundplatte und der unteren Verbundplatte erstrecken,
wobei mindestens zwei der Brennstoffeinheiten ferner je mindestens einen der genannten Tanks (10, 10a, 10b) enthält, wobei jeder Tank parallel zu den Brennstäben und zwischen der oberen Verbundplatte und der unteren Verbundplatte angeordnet ist.

## Revendications

1. Assemblage combustible pour un réacteur à eau bouillante comportant
une pluralité de crayons (4) combustibles s'étendant entre un embout (5) supérieur et un embout (6) inférieur, et
un réservoir (10) oblong qui est fermé à son extrémité inférieure et est muni à son extrémité supérieure de moyens (11, 12) destinés à fournir de l'eau au réservoir, et des moyens (14) destinés à libérer de la vapeur qui est formée à l'intérieur du réservoir, réservoir qui est disposé en ayant sa direction longitudinale sensiblement parallèle à la direction longitudinale de l'assemblage combustible, **caractérisé en ce que** l'assemblage combustible comporte une pluralité de réservoirs (10) et **en ce que** ceux-ci sont disposés les uns après les autres dans la direction longitudinale de l'assemblage combustible.

2. Assemblage combustible suivant la revendication 1, **caractérisé en ce que** le nombre de réservoirs (10) est d'au moins trois.

3. Assemblage combustible suivant la revendication 1 ou 2, **caractérisé en ce que** chaque réservoir (10a, 10b) a un volume choisi de manière arbitraire.

4. Assemblage combustible suivant l'une quelconque des revendications précédentes, **caractérisé en ce qu'**il comporte au moins deux réservoirs (10) parallèles.

5. Assemblage combustible suivant l'une quelconque des revendications 1 à 3, **caractérisé en ce qu'**il comporte une pluralité d'unités (3a) combustibles empilées les unes au-dessus des autres, chaque unité combustible comportant
un embout (5) supérieur,
un embout (6) inférieur,
une pluralité de crayons (4) combustibles qui s'étendent entre l'embout supérieur et l'embout inférieur, et au moins l'un des réservoirs (10, 10a, 10b) qui est disposé parallèlement aux crayons combustibles entre l'embout supérieur et l'embout inférieur.

6. Assemblage combustible suivant l'une quelconque des revendications 1 à 3, **caractérisé en ce qu'**il comporte une pluralité d'unités combustibles (3a) empilées les unes au-dessus des autres, chaque unité combustible comportant
un embout (5) supérieur,
un embout (6) inférieur,
une pluralité de crayons (4) combustibles qui s'étendent entre l'embout supérieur et l'embout inférieur,
au moins deux des unités combustibles comportant chacune en outre au moins l'un des réservoirs (10, 10a, 10b), chaque réservoir étant disposé parallèlement aux crayons combustibles et entre l'embout supérieur et l'embout inférieur.
